# EUROPEAN PATENT SPECIFICATION

(11) **EP 1 764 933 B1**
(45) Date of publication and mention of the grant of the patent: **13.08.2008**
(21) Application number: 05020327.2
(22) Date of filing: 17.09.2005
(51) Int. Cl.: H04B 7/185

(54) **Aeronautical communication system**
Aeronautisches Kommunikationssystem
Système de communications aéronautiques

(43) Date of publication of application: 21.03.2007
(73) Proprietor: Deutsches Zentrum für Luft- und Raumfahrt e.V., 51147 Köln (DE)
(72) Inventor: Berioli, Matteo, Dipl.-Ing., 81373 München (DE); Mei Lan Chan, Pauline, BD1 1NE Bradford (GB); Yim Hu, Fun, Dr., BD16 1WH, Cottingley, Bingley (GB)
(74) Representative: von Kirschbaum, Albrecht

(56) References cited:
- US-A1- 2002 170 060
- M. BERIOLI ET AL.: "Wirelesscabin target system specification document" IST-2001-37466, no. D9, June 2003 (2003-06), pages 1-209, XP002364476
- A. DONNER, M. BERIOLI: "MPLS-based satellite constellation networks" IEEE JOURNAL ON SELECTED AREAS IN COMMUNICATIONS, vol. 22, no. 3, April 2004 (2004-04), pages 438-448, XP002364477
- JAHN A ET AL: "System architecture for 3G wireless networks in aircraft" 6 October 2003 (2003-10-06), VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, PAGE(S) 2491-2495 , XP010701965 ISBN: 0-7803-7954-3 * the whole document *
- BERIOLI M ET AL: "IP Mobility Support for IPsec-based Virtual Private Networks: an architectural solution" 1 December 2003 (2003-12-01), GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, PAGE(S) 1532-1536 , XP010677551 ISBN: 0-7803-7974-8 * the whole document *
- D. BOLLO, M. STUMM: "Rethinking nomadic network uses" IEEE VEHICLE NAVIGATION & INFORMATION SYSTEMS CONFERENCE PROCEEDINGS, 31 August 1994 (1994-08-31), pages 507-512, Yokohama, Japan
- HAMID BERENJI: "Neural Networks and Fuzzy Logic in Intelligent control" 5TH IEEE SYMPOSIUM ON INTELLIGENT CONTROL, 5 September 1990 (1990-09-05), pages 916-920, XP010021818 Philadelphia

## Description

The present invention relates to an aeronautical communications system providing digital personal and multimedia information transmission between users of an aircraft wireless in-cabin network and terrestrial home networks via satellite connection by use of three segments, specifically a cabin segment, a transport segment, and a ground segment, each segment consisting of various network domains,
said cabin segment consisting of a local access domain and a service integration domain,
said transport segment consisting of one or more satellite systems constituting the transport domain,
and said ground segment consisting of a service provider domain, a public network domain and a home network domain,
said local access domain comprising at least three radio access networks providing GSM/UTRAN (UMTS terrestrial radio access network) radio access, WLAN (Wireless LAN) access and Bluetooth (BT) radio access, said service integration domain hosting some core network functionalities of GSM/UMTS network and IP protocol functions for authentication, admission control and accounting, mobility support, Quality of Service (QoS) support and the interfaces towards the transport network, and said service integration domain further housing two enhanced routers, one directly connected to said local access domain and another to the satellite terminal, these two routers being implemented with supporting protocol functions to perform various networking tasks, said router being connected to said local access domain acting mainly as a multiplexer while the second one, hereafter called the intelligent router, being connected to a satellite terminal and hosting several intelligent functions for mobility and QoS support,
said transport domain providing connectivity between each wireless access network in said local access domain and said service provider domain via said service integration domain and consisting of one or several satellite and/or terrestrial systems, which include circuit-switched, packet-switched and broadcast systems, to provide circuit or packet-switched bearer services for the transport of service mix to a service provider on ground, handover between different satellite systems as well as combination of different systems being supported to increase coverage and capacity,
said service provider domain comprising an enhanced router which interoperates with said intelligent router in said service integration domain in a client-server mode, being ensured that connection between said service integration domain and said service provider domain is established and maintained, even when the signalling path is transferred to a different satellite system during handover,
said service provider domain and said service integration domain comprising together a special managing system for handling handover management functions,
said handover management functions being performed by a pair of handover managers, specifically by a handover manager client located in said intelligent router of said service integration domain and by a handover manager server located in the router of said service provider domain, both the handover manager client and the handover manager server interoperating with other network entities for handover, said handover manager client being able to communicate with more than one satellite system and to perform the handover between these systems, to enable inter-satellite systems handover by use of an intersatellite handover initiation and decision algorithm in said aeronautical network, wherein multiple constraints consideration for the handover initiation and decision algorithm is enabled by taking into account at least following parameters: satellite signal strength, quality of service, i.e. quality in the active link such as packet throughput, delay, etc, and relative location of the aeronautical network with respect to the satellite coverage.

Over the last decade, a significant amount of research effort has been placed on mobility management for wireless networks to provide roaming and handover support.

In the past, handover has been concentrated on inter- and intra-cell handovers. More recently, handover between satellite and terrestrial networks have also been studied for land mobile applications, see N. Efthymiou, Y.F. Hu, R.E. Sheriff: "Performance of Intersegment Handover Protocols in an Integrated Space/Terrestrial UMTS Environment" in IEEE Transactions on Vehicular Technology, Special Issue "Universal Mobile Telecommunications System", 47(4), November 1998; pp. 1179-1199 and P.M.L. Chan, R.E. Sheriff, Y.F. Hu, P. Conforto, C. Tocci: "Design and Evaluation of Signaling Protocols for Mobility Management in an Integrated IP Environment", in Computer Networks, The International Journal of Computer and Telecommunications Networking, Elsevier Science B.V., 38(4), 2002; pp. 517-530. However, no solutions have been proposed in existing literature particularly for handover over IP-based satellite links for nomadic networks.

At this time there is no specific handover managing system and algorithm for nomadic networks based on the exploitation of IP-based satellite connections.

From the protocol point of view the two standard IP protocols, Mobile IP and IPsec, never work together. As a consequence IP-based tunnels can only be either secure by means of IPsec or easy to be switched by means of Mobile IP, so security and mobility cannot be combined at IP layer. The existing solution regarding the execution of a secure handover over IP-based links, involve the definition of new supporting entities, see F. Adrangi, P. Iyer, K. Leung, M. Kulkarni, A. Patel, Q. Zhang, and J. Lau: "Mobile IPv4 Traversal Across IPsec-based VPN Gateways" in IETF Draft: draft-adrangi-mobileip-vpn-traversal-02 (work in progress), July 2002.

Nomadic networks are networks moving altogether. In this kind of networks internal nodes do not have to be concerned about mobility, since there is a single entity that takes care of the problem by handling a wireless connection to a fixed home network. For instance in future aeronautical passenger communications systems a set of services such as telephony and Internet access will be provided over several transport segments, see A. Jahn, M. Holzbock, J. Muller, R. Kebel, M. de Sanctis, A. Rogoyski, E. Trachtman, O. Franzrahe, M. Werner, Y.F. Hu: "Evolution of Aeronautical Communications for Personal and Multimedia Services" in IEEE Communications, 41(7), July 2003, pp. 36-43. In some cases, such transport segments could very likely be IP-based satellite connections.

To support worldwide mobility, handover would be necessary with the support of a handover manager. The handover manager constitutes a group of functional entities located in various network elements of the aeronautical passenger communication system. These handover functional entities need to interact with other entities to ensure a seamless handover.

As regards the execution of the handover over IP-based connections, the aim is to maintain a secure IP connection while switching by means of IPsec protocol which is described in S. Kent and R. Atkinson: "Security Architecture for the Internet Protocol", RFC 2401: IETF, 1998. The problem addressed has already been discussed in other ways in F. Adrangi, M. Kulkarni, G. Dommety, E. Gelasco, Q. Zhang, S. Vaarala, D. Gellert, N. Baider, and H. Levkowetz: "Problem Statement: Mobile IPv4 Traversal of VPN Gateways" in IETF Draft: draft-ietf-mobileip-vpnproblem-statement-req-01 (work in progress), January 2003 and in F. Adrangi, P. Iyer, K. Leung, M. Kulkarni, A. Patel, Q. Zhang, and J. Lau: "Mobile IPv4 Traversal Across IPsec-based VPN Gateways" in IETF Draft: draft-adrangi-mobileip-vpn-traversal-02 (work in progress), July 2002. In particular the latter is an expired Internet draft which proposes the introduction of a new functional entity in the Mobile IP framework (the "Mobile IP proxy").

A. Donner, M. Berioli: "MPLS-Based Satellite Constellation Networks", IEEE Journal on selected areas in communications, Vol. 22, No. 3, April 2004, deals with MPLS (Multiprotocol Label Switching). The solution proposed therein works below IP. No technique for the handover or re-routing is discussed herein. It is only tried to evaluate the effort due to (re)-routing of MPLS tunnels in a LEO (Low Earth Orbit) constellation.

US-A-2002170060 describes a method for providing region-specific data content to a plurality of platforms traveling in a plurality of satellite coverage regions as the platforms leave one region and enter another region. Within each of the coverage regions, data content selected for the region is multicast to platform via an associated ground station and satellite. As a platform leaves a coverage region to enter another coverage region, the ground stations associated with the region being left and the region being entered perform satellite handover procedures to transfer satellite link communications from one satellite to another. At satellite handover, the ground station being left by the platform transmits, via satellite link, changes to a forwarding table aboard the platform. The forwarding platform is changed to authorize, or configure, the platform mobile communications system to receive data content multicasts being transmitted in the region being entered by the platform.

It is object of the present invention to improve inter-satellite systems handover for aeronautical communications based in particular on the so called WirelessCabin project which is described in M. Berioli, Chao Chi-Ming, P. Chan, H. Che, N. Courville, M. De Sanctis, P. Febvre, O. Franzrahe, O. Grémillet, F. Hu, A. Jahn, A. Lorelli, J. Müller, C. Párraga, P. Pillai, Z. Sun: "WirelessCabin Target System Specification Document" Deliverable D9 version 1 IST-2001-37466 WirelessCabin, June 2003. Content of this detailed paper is summarized in A. Jahn, C. Párraga Niebla: "System Architecture for 3G wireless networks in aircraft", Vehicular Technology Conference, 2003, VTC 2003-Fall, 2003 IEEE 58th Orlando, FL, USA, 6-9 Oct. 2003, Piscataway, NJ, USA, IEEE, US, XP010701965, pages 2491 2495. At the present there are no existing solutions for IP-based handover for nomadic networks.

According to the present invention the aeronautical communications system is characterised in that fuzzy-logic heuristic rules and a neural network with approximate reasoning-based controllers for the intersatellite handover initiation and decision algorithm are used, in that said fuzzy logic is used to provide an inference engine under cognitive uncertainty to determine a handover factor and to provide learning, adaptation and fault-tolerance capabilities, in that a location predictor uses a connectionist learning approach known as reinforcement learning which is a computational approach to understand and automate goal-directed learning and decision-making, in that the location predictor uses the inputs of the system to predict the time and distance to the region where handover is required, in that the results of the location predictor are fed into said fuzzy logic inference engine which takes also into consideration several other input parameters from the system, and in that knowledge-based fuzzy rules are used to achieve an expert system in which multiple parameters can be analysed using heuristic rules, this algorithm producing the handover factor that can be used as a metric to determine whether handover is required.

The present invention deals specifically the following technical issues:
- The functional model for the handover manager, in particular, the mapping of its functional entities onto different network domains and their interactions in order to perform inter-satellite system handover.
- The interactions of these handover functional entities with other functional entities in an aeronautical network for Quality of Service (QoS) during handover.
- The intelligent functions provided for the handover manager through the development of an inter-satellite system handover algorithm.
- The execution of the handover over wireless IP-based communication links, able to guarantee at the same time security and mobility.

The present invention specifically addresses the functional architecture of the handover manager to perform inter-satellite systems handover for aeronautical communications based in particular on the WirelessCabin project which is described in M. Berioli, Chao Chi-Ming, P. Chan, H. Che, N. Courville, M. De Sanctis, P. Febvre, O. Franzrahe, O. Grémillet, F. Hu, A. Jahn, A. Lorelli, J. Müller, C. Párraga, P. Pillai, Z. Sun: "WirelessCabin Target System Specification Document" Deliverable D9 version 1 IST-2001-37466 WirelessCabin, June 2003. Especially, the distribution of the intelligent functions and algorithms implemented among the different physical entities is analyzed. Emphasis is placed on the handover functional model, whereby the distribution of functional entities onto the network entities, and their interactions are defined.

The solution presented by this invention is new.

From the protocol point of view, the existing solution regarding the execution of a secure handover over IP-based links, involve the definition of new supporting entities, see F. Adrangi, P. Iyer, K. Leung, M. Kulkarni, A. Patel, Q. Zhang, and J. Lau: "Mobile IPv4 Traversal Across IPsec-based VPN Gateways", IETF Draft: draft-adrangi-mobileip-vpn-traversal-02 (work in progress), July 2002. On the other hand is to remark that the solution proposed by the present invention is capabel to make use of standard protocols, namely IPsec and Mobile IP.

Further subject matters concerning improvements, perfections and realizations of the present invention are given in dependent claims depending directly or indirectly on claim 1.

The claimed aeronautical communications system including the new handover manager is useful in inter-satellite systems handover strategy for aeronautical communications, based on a fuzzy neural system for handover initiation and decision. The invention mainly refers the particular distribution of intelligent handover manager functional entities between the service integration domain (onboard the moving network) and the service provider domain (the home network).

Joint usage of Mobile IP and IPsec standard protocols for handover execution over IP-based communication links is possible without any problem. An important idea is to encapsulate IPsec tunnel inside the Mobile IP tunnel, so that at handover, when the mobile node's IP address changes, only the external tunnel has to be switched. This allows maintaining a secure internal tunnel, the IPsec tunnel, always on during handovers.

The present invention will now be described in greater detail with reference to the accompanying drawings, of which:
- Fig.1: shows functional block diagram of an aeronautical passenger communications system,
- Fig.2: shows the location of handover manager client (HO-client) and handover manager server (HO-server) in the architecture of an aeronautical communications system according to the present invention,
- Fig.3: shows a functional model for handover,
- Fig.4: shows mapping of the functional model onto the network architecture,
- Fig.5: is a schematic diagram of the HO-client,
- Fig.6: is a schematic diagram of the HO-server
- Fig.7: shows a functional block diagram of a fuzzy neutral system for the handover (HO) initiation and decision algorithm
- Fig.8: shows an "IPsec over MoIP" tunnel,
- Fig.9: shows three possible combinations (I, II, III) of IPsec-MoIP
- Fig.10: shows system operation, where in (a) packet is originated in the mobile node and in (b) packet is directed to the mobile node,
- Fig.11: shows information flows between domains, and
- Fig.12: shows an handover operation procedure.

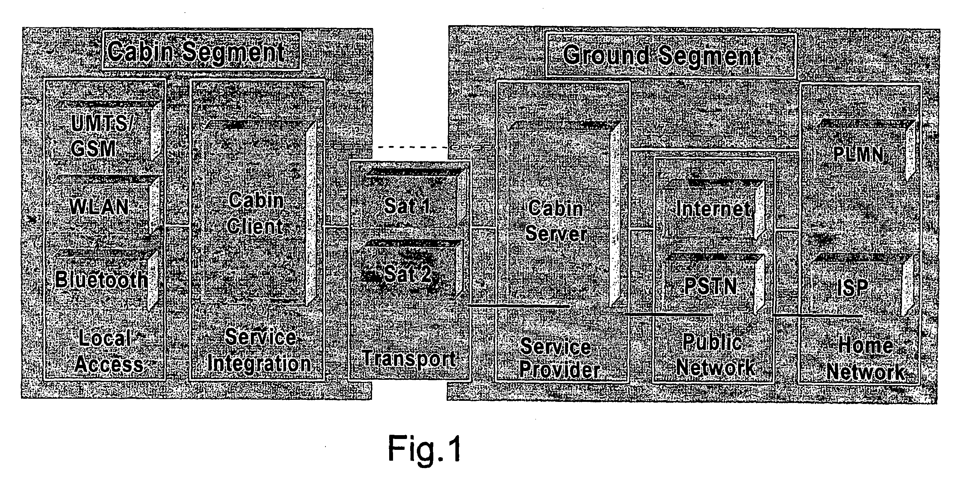

Fig.1 shows a functional block diagram of an aeronautical passenger communications system in accordance with the system of the present invention. The general system architecture for aeronautical services provision can be distinguished by three segments, i.e. a Cabin Segment, a Transport Segment and a Ground Segment, see already mentioned specification of M. Berioli, Chao Chi-Ming, P. Chan, H. Che, N. Courville, M. de Sanctis, P. Febvre, O. Franzrahe, O. Grémillet, F. Hu, A. Jahn, A. Lorelli, J. Müller, C. Párraga, P. Pillai, Z. Sun: "WirelessCabin Target System Specification Document" Deliverable D9 version 1 IST-2001-37466 WirelessCabin, June 2003.

Each segment consists of various network domains as shown in Fig.1. The Cabin Segment consists of a Local Access Domain LAD and a Service Integration Domain SID. The Transport Segment consisting of one or more satellite systems constitutes the Transport Domain TD. The Ground Segment consists of a Service Provider Domain SPD, a Public Network Domain and a Home Network Domain HND.

The Local Access Domain LAD comprises three radio access networks providing the UTRAN radio access, the WLAN access and the Bluetooth access. The Service Integration Domain SID hosts some core network functionalities of the UMTS network and IP protocol functions for authentication, admission control and accounting, mobility support, Quality of Service (QoS) support and the interfaces towards the transport network.

The Service Integration Domain SID houses two enhanced routers, one is directly connected to the Local Access Domain LAD and another to the satellite terminal. These two routers are implemented with supporting protocol functions to perform various networking tasks. The router connected to the Local Access Domain LAD acts mainly as a multiplexer while the second one, hereafter called the intelligent router, is connected to the satellite terminal and hosts several intelligent functions for mobility and QoS support.

The Transport Domain TD provides connectivity between each radio access network in the Local Access Domain LAD and the Service Provider Domain SPD via the Service Integration Domain SID. It consists of one or several satellite (or terrestrial) systems, which include circuit-switched, packet-switched and broadcast systems, to provide circuit or packet-switched bearer services for the transport of the aeronautical service mix to an aircom service provider on ground. Handover between different satellite systems as well as combination of different systems are supported to increase coverage and capacity.

A key element in the Service Provider Domain SPD is an enhanced router which interoperates with the intelligent router in the Service Integration Domain SID in a client-server mode. One of the most important aspects of the system design is to ensure that connection between the Service Integration Domain SID and the Service Provider Domain SPD is established and maintained, even when the signalling path is transferred to a different satellite system during handover.

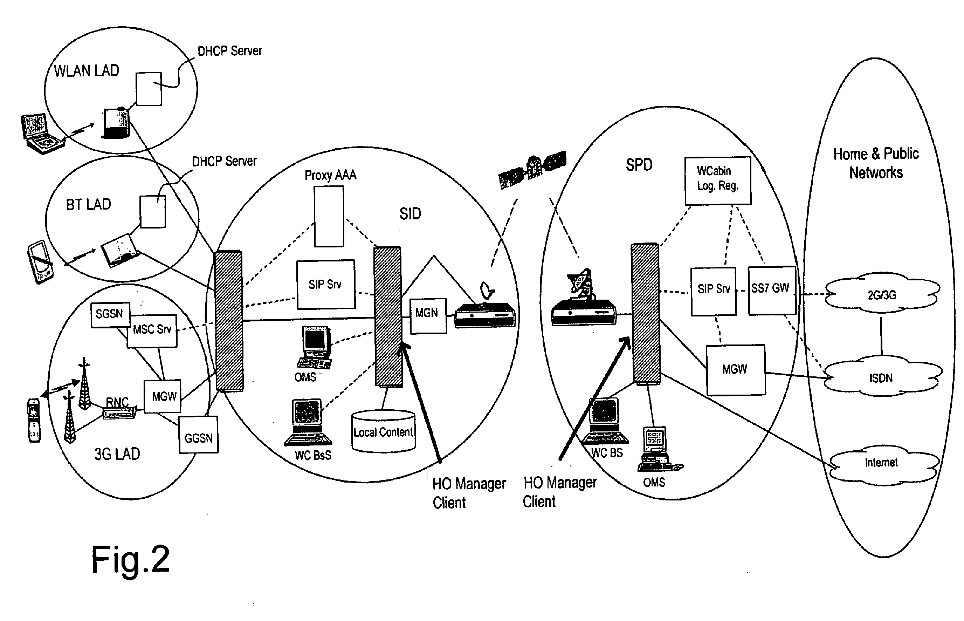

The handover management functions are performed by a pair of handover managers, specifically the handover manager client (HO-client) located in the intelligent router of the Service Integration Domain SID and by the handover manager server (HO-server) located in the router of the Service Provider Domain SPD as shown in Fig.2. Both the HO-client and the HO-server will interoperate with other network entities for handover. To enable inter-satellite systems handover, the HO-client has to be able to communicate with more than one satellite systems and to perform the handover between these systems. Since the satellite systems act as transport networks for incoming and outgoing packet streams to and from the aircraft cabin, the concept of inter-satellite systems handover refers to the handover of digital transport packet streams from one satellite system to another.

The functionalities of the HO-client and HO-server are governed by the handover strategy, which also defines the functional model for handover. The handover strategy comprises three different schemes for the three handover phases: the initiation, the decision and the execution phases. The functional model describes the functional entities and their interactions required to carry out the handover functions in accordance with the handover strategy. These functional entities have to be mapped onto the network architecture.

The handover strategy encompasses different handover schemes deployed during the three handover phases, namely:
- The handover controlling scheme for the handover initiation and decision phases. The handover initiation phase is also known as the information gathering phase, which involves the collection of data and information necessary for handover initiation. The handover decision phase concerns with the decision of choosing the most suitable path for handover execution.
- The handover connection establishment scheme and the connection transference scheme for the establishment of the signalling and data paths respectively in the execution phase.

In the present invention, the handover controlling scheme chosen for the handover initiation and decision phases is Mobile Controlled Handover (MCHO) whereas the handover connection establishing scheme and the connection transference scheme chosen for the establishment of the signalling and data paths in the execution phase are Forward Handover and Soft Handover respectively. The rationale for adopting the aforementioned handover strategy is briefly described below.

With Mobile Controlled Handover (MCHO), a mobile node will gather necessary measurements, such as the radio link quality, for handover initiation. Handover decision is also made by the mobile node. In the system architecture under consideration, the mobile node refers to the router within said service integration domain SID.

Under this scheme, said service integration domain SID will be implemented with intelligence functions for handover prediction by collecting the location information of the plane and the coverage area of the satellite system and by continuously monitoring the signal level and link quality over the communication links. This scheme has the advantage of establishing a fast handover with a low signalling load since signalling exchange between the mobile node and the network can be kept to a minimum. This is essential to compensate for the propagation delay and the limited bandwidth characteristics of the satellite channel.

The connection-establishing scheme defines the way to execute signalling exchange between the terminal and the network needed to set up the new connection and to release the old one. It includes forward handover and backward handover. To ensure a more reliable handover, forward handover is chosen.

A handover connection transference scheme defines the way of transferring from the original data connection to the target connection. Two different connection transference schemes can be considered: hard handover and soft handover. Hard handover is a "break before make" scheme whereas soft handover is a "make before break" approach.

Hard handover will inherently introduce an interruption to on-going sessions. This will not be suitable for handover between different satellite systems due to the long propagation delay. In addition, different satellite systems may provide different QoS support. Under such circumstances, QoS re-negotiation may be necessary during handover. This renders hard handover inappropriate.

On the other hand, soft handover is made possible by the deployment of two simultaneous ISDN links in the aeronautical communications system under consideration. Soft handover is already used in radio access networks, where analogue signals can be combined over different radio access nodes. The present invention adopts the concept advantageously also for digital transport streams.

In the following the managing system for handling handover functions will be described.

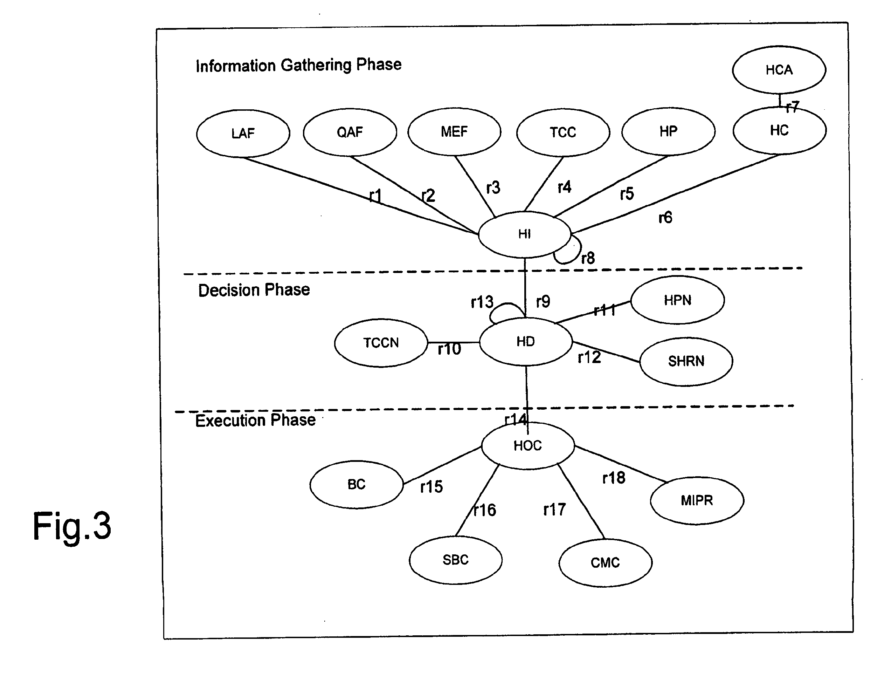

In order to perform a successful handover procedure, several handover functional entities are suggested and defined, which includes the radio channel quality estimation, satellite selection, quality of service assessment, resource reallocation, handover initiation, decision and execution functions. When the entities are combined together, a generic handover (HO) functional model is produced, which is compliant with ITU-T Q.1711 specifications. This model is applicable to any handover procedure and is shown in Fig.3.

The functional model described here is a generic model and is applicable to any inter-satellite handover function. In the following, a brief description of all the functional entities will be provided.

First, functional entities for the information gathering phase will be described.

### Measurement Functions MEF:

This function gathers measurements concerning the active link such as the bit error rate BER, delay jitter, link loss probability and time before link loss. It feeds this information to the handover initiation function HI periodically to enable handover initiation.

### Quality Assessment Functions QAF:

This function gathers measurements concerning the quality of service in the active link such as the packet throughput, delay, etc. It feeds this information to the handover initiation function HI periodically to enable handover initiation.

### Location Assessment Functions LAF:

This function gathers measurements concerning the location of the aircraft and feeds this information to the handover initiation function HI periodically to enable handover initiation.

### Target Cells and Connections TCC:

This function provides a list of candidate satellite and satellite beams to the handover initiation function HI.

Information provided includes radio link quality, satellite population vs. satellite capacity, etc.

### Handover Profile Service Integrator (SI) HP:

This function contains a subset of the plane service integrator's (PSI) profile, which is relevant to the handover process such as bandwidth requirements, QoS requirements, access rights, priorities, environment selection, operator selection, preference list, etc. PSI is the router in the service integration domain SID.

### Handover Criteria Adjustment HCA:

This function sets and updates the handover criteria according to information from the resource and network management, operations and maintenance.

### Handover Criteria HC:

This function contains the handover criteria used in the handover algorithms. Handover Criteria HC receives information of the handover criteria from Handover Criteria Adjustment HCA.

### Handover Initiation HI:

This function receives information of the active link based on the handover criteria set by HCA from MEF, LAF and QAF as well as TCC. Using this information and also the information contained in the service integrator (SI), handover initiation HI will identify the need for handover. Handover initiation HI will then issue a handover request to handover decision HD, in which it will specify whether a handover, additional connection or macrodiversity is required together with the information of the time constraints.

Now, functional entities for the decision phase will be described.

### Handover Decision HD:

This function receives handover execution request from HI and determine the location of the handover control point. It is also responsible for negotiating the possibility of service degradation/improvements based on the information obtained from HPN and TCCN. In addition, handover decision HD is also capable of receiving a forced handover request from the network SHRN. In the event of a handover, handover decision HD sends a handover execution request to handover control HOC and provides information regarding the position of the new connection point and the time constraints. The result of the handover decision should then be provided to the handover initiation HI, so that handover initiation HI can adjust and update its evaluation of the handover initiation.

### Target Cells and Connection-Network TCCN:

This function provides handover decision HD with information of the resources available in the candidate network so that handover decision HD can negotiate the link quality degradation. This entity also provides radio resource management information to the handover decision HD.

### Handover Profile earth service integrator (ESI) HPN:

This function contains a subset of the ESI's profile, which is relevant to the handover process such as bandwidth requirements and QoS requirements. ESI is the router in the service provider domain SPD.

### Special Handover Request-Network SHRN:

This entity instructs the handover decision HD to initiate a forced handover when requested by the network. It will provide handover decision HD with all relevant information for the handover.

Finally the functional entities for the execution phase will be described.

### Handover Control HOC:

This function receives handover execution instructions and other relevant information from handover decision HD. It keeps track of the coordination of handover process and reports the result of the handover execution back to handover decision HD.

### Bearer Control BC:

This function receives instruction from handover control HOC to establish or release bearers form handover control HOC. It will then report the results back to handover control HOC.

### Switching and Bridging Control SBC:

This function is responsible for controlling the switching and bridging functions between the numbers of bearers. It receives the instructions to perform this from handover control HOC.

### Combining and Multicasting Function CMC:

This function is responsible for controlling and combining multicasting functions in a macrodiversity group. It controls the set-up, release and change of combine and multicasting functions.

### Mobile IP Registration MIPR:

This entity is responsible for handling all Mobile IP procedures in the service integrator (SI).

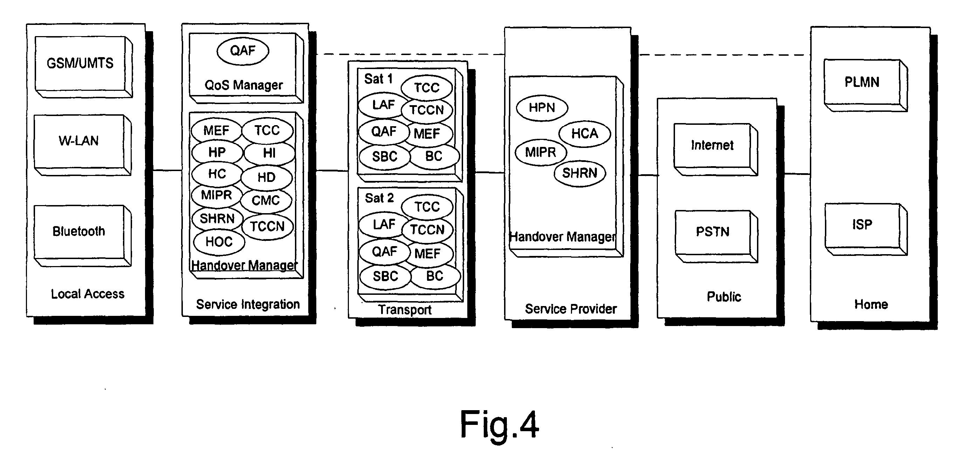

The originality of this proposal is on the functional distributions for the handover management tasks, concentrating on the mapping of handover entities and interfaces onto the handover manager client HO-client in the service integration domain SID, the handover manager server HO-server in the service provider domain SPD and onto the transport domain TD. The majority of the entities will be mapped onto the handover manager client HO-client. Other elements of the functional model are mapped onto other modules in the system such as the QoS manager and the transport (or the satellite) segment as shown in Fig.4.

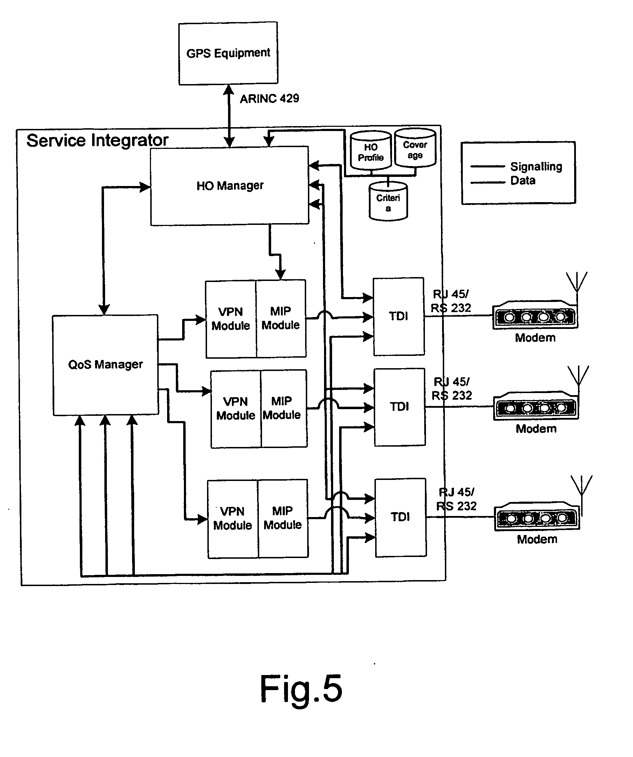

The functional architecture of the handover manager client HO-client is represented schematically in Fig.5. From Fig.5, it can be seen that the HO-client has one physical connection to the GPS equipment. In addition, it also consists of several logical connections, which interfaces with the QoS module, the transport domain interface TDI and the database modules.

The interface to a position-determination system such as GPS is required to obtain information on the position of the aircraft. The two main logical interfaces of the HO manager are to the QoS manager and also to the transport domain TDI. The TDI interface is used when the HO-client needs to obtain information from the antenna systems or from the satellite core network. These messages will be carried by standard IP protocols to ensure that the HO-client is applicable to any system as long as the target system supports IP based protocols. On the other hand, the interface to the QoS manager is required to obtain QoS information, such as the different service types, applications and also the size of queues in the scheduler. The HO-client also interfaces with the Bandwidth on Demand (BoD) module, which resides in the QoS Manager to set up and tear down any satellite connections.

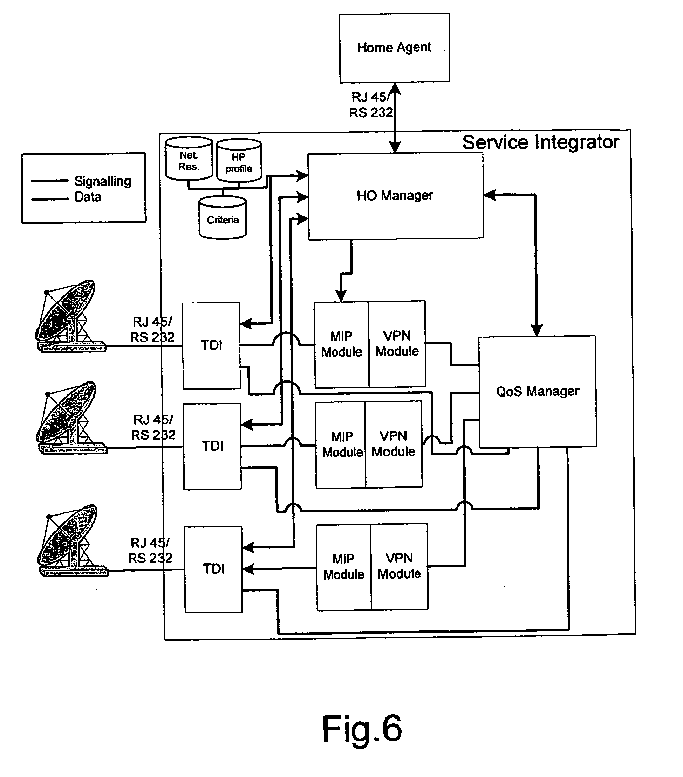

Fig.6 shows the schematic diagram of the HO-server. From the diagram, it can be seen that the HO-server is rather similar to the HO-client in the aircraft cabin. However, there is no interface to the GPS equipment. Instead, an additional physical interface to the Home Agent HA has been defined. This interface can be removed if the Home Agent HA collocates with the route on ground.

In addition, the HO-server also interfaces with the MIP (Mobile IP) module to ensure that the MIP module is aware of the current bindings of the intelligent router to its home network.

One of the major developments of the handover management functions is the handover algorithm used to initiate the handover procedures. Several parameters can be considered for the handover initiation and decision phases, namely, the signal strength, the quality of service, the relative location of the plane with respect to the satellite system coverage. A novel approach using fuzzy heuristic rules and neural network is adopted to enable multiple constraints consideration for handover initiation and decision.

The algorithm uses the location and velocity of the plane to determine the distance of the plane from the handover boundary. This parameter is then combined with several other parameters, such as the user's demand for services, network capacity and network load to determine whether handover is required. The algorithm then uses the analytic hierarchy process to determine the appropriate course of action in case handover is initiated.

To ensure that packets transported over the system is secure, Mobile IP and IPsec have been incorporated in the design of the handover execution algorithm.

The non-linear behaviour of the many interconnected systems and the unavailability of quantitative data regarding the input-output relations make the analytical modelling of the handover algorithm very difficult. One of the solutions to this problem is to use approximate reasoning based-controllers which do not require complicated analytical reasoning.

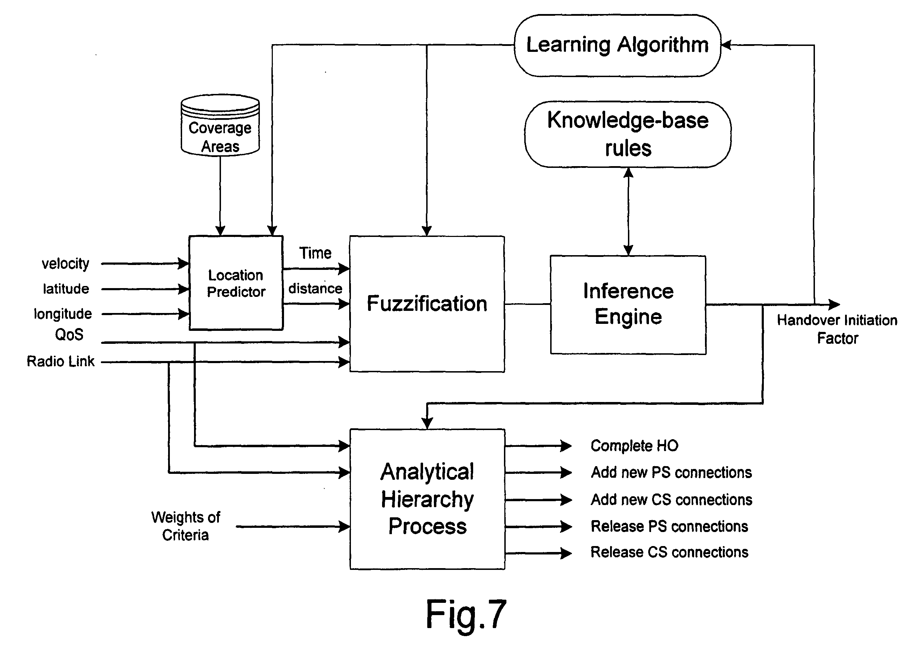

For this purpose, the handover algorithm for the system utilises an intelligent hybrid approach, in which fuzzy logic is used to determine handover initiation. The model chosen for the handover algorithm is shown in Fig.7.

In this architecture, fuzzy logic is used to provide an inference mechanism under cognitive uncertainty to determine the handover factor and to provide learning, adaptation and fault-tolerance capabilities. The location predictor used in the architecture uses a connectionist learning approach known as reinforcement learning. Reinforcement learning is a computational approach to understand and automate goal-directed learning and decision-making. In this approach, the location predictor will use the inputs of the system to predict the time and distance to the region where handover is required. The decision made by the predictor will be adjusted based on the accuracy of the decision.

The result of the location predictor together with the measured QoS and radio link parameters are then fed into a fuzzy logic inference engine which will also take into consideration several other input parameters from the system. Using knowledge-based fuzzy rules, an expert system is achieved; in which multiple parameters can be analysed using heuristic rules. This algorithm will produce a handover factor that can be used as a metric to determine whether handover is required.

In the handover decision stage, several courses of actions are possible. For example, a complete handover from one satellite system to a new satellite system can be initiated. If this occurs, all current connections have to be transferred to the new system. Alternatively, it may also be possible to just create or release a satellite connection using the existing satellite system to increase/decrease the capacity of the system depending on the usage and demand of the system. Here, an analytical hierarchy process is applied, in which weights are assigned to the parameters used to determine the appropriate course of action.

Once handover is decided, new connections for both signalling and user data transfer need to be established before the old ones are released. Since the system needs to work over different satellite segments, it is important to select protocols that make this solution as independent as possible from lower layer implementation of the satellite connection. That is the reason why IP layer instruments were chosen in this framework: Mobile IP was selected to manage mobility and IPsec to guarantee security. Since the aeronautical communications system may utilise Mobile IPv4 to support mobility, a new Mobile IP registration of the router in the service integration domain SID with its new foreign network (or the new satellite system/connection) is required, which can be achieved by sending a Mobile IP registration request to inform its home agent HA of its new foreign network.

An important aspect during handover execution is to ensure security. The ability to use secure services will allow the router in the service integration domain SID, which is away from home to reach the service provider domain SPD via a secure channel. In order to complement Mobile IPv4 for mobility support at the network layer, the security protocol envisaged in the system will be focussed on IPsec-based Secure VPNs (Virtual Private Networks) due to the advantages obtained by providing security at the network layer and the strong security features demonstrated by IPSec in recent years.

Combining the services of Mobile IP and IPsec leads to some problems due to the incompatibility between MoIP and IPsec. Both protocols can be thought of as an IP tunnel, created by means of some enhancements to the IP protocol. There are only two ways of combining these two tunnels: either a MoIP tunnel "inside" an IPsec tunnel, namely MoIP over IPsec, or an IPsec tunnel "inside" a MoIP tunnel, namely IPsec over MoIP can be envisaged. In the target system, the IPsec over MoIP approach have been proposed.

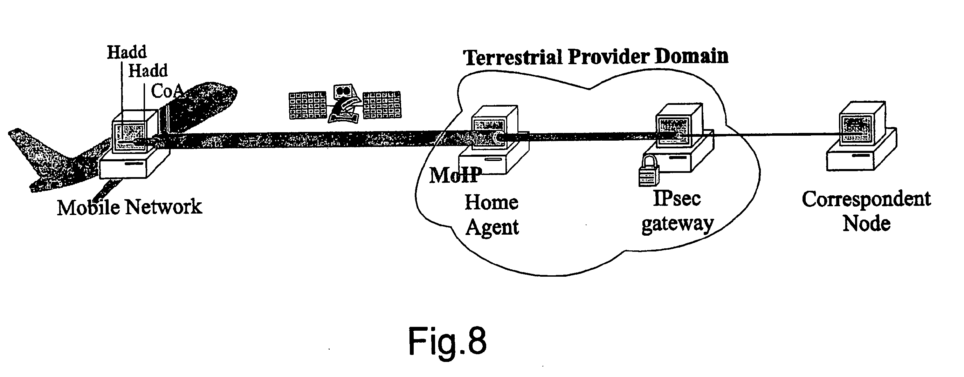

The idea of "IPsec over MoIP" is shown in Fig.8 where the IPsec tunnel (between Home Agent and IPsec gateway) is depicted slightly darker and thinner than the MoIP tunnel (between Mobile Network and Home Agent). The example shows a network onboard an airplane; the satellite link, which permanently connects the airplane to a terrestrial provider domain, is secured by means of IPsec that can be switched due to the mechanisms provided by MoIP.

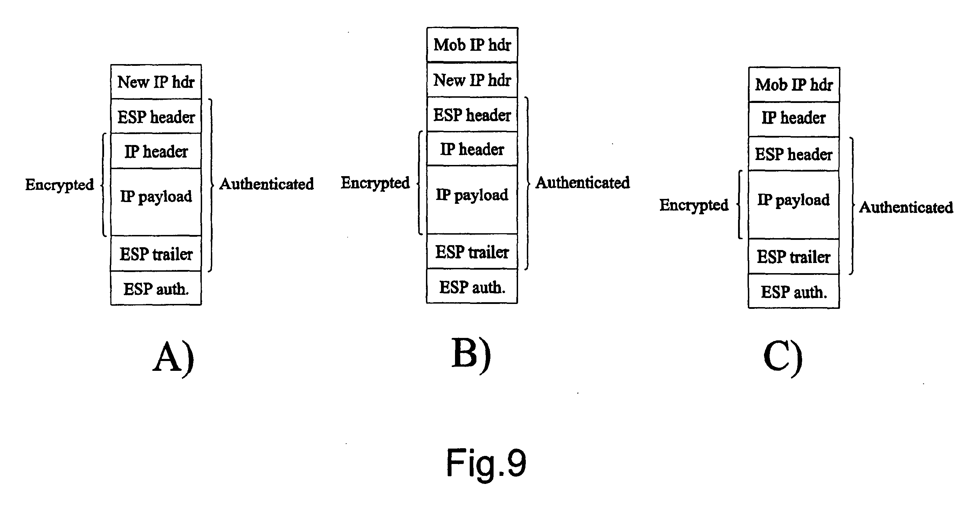

Three possibilities to combine IPsec and Mobile IP are depicted in Fig.9. The first method A) is a plain IPsec with ESP (IPsec encapsulated) in tunnel mode. This is not very flexible, since a new IPsec tunnel has to be established for handover, which is normally a time-consuming procedure, as it requires asymmetrical keys exchange. The second method B) is IPsec with ESP in tunnel mode over Mobile IP. This guarantees strong security and better flexibility, since the "external" Mobile IP tunnel can be easily switched during handover. The problem of this solution is the large overhead. The third method C) exploits ESP in the transport mode to save one IP header and it is the preferred choice for the system as it appears to be the intelligent trade-off between the previous two.

To ensure MoIP and IPsec operate correctly together, the system needs to be configured properly, lest packets which deserve encryption will be sent clear over the non-trustable link. Moreover in the chosen IPsec-MoIP combination, MIP (Mobile IP) registrations are to be performed before an IPsec tunnel is set up. This is only possible if the Home Agent HA of the router in the service integration domain SID is inside the service provider domain SPD and can be accessible to that router i.e. to the airplane. In this patent application, the manner in which the fixed and the mobile domains should be configured is described, in order to allow correct operation of IPsec and MIP.

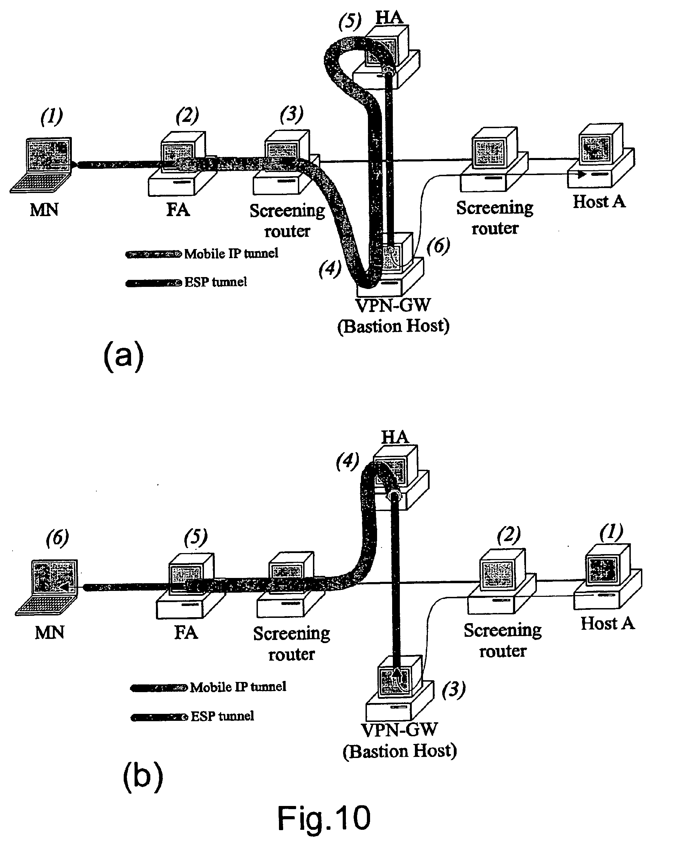

The main idea relies on the possibility to force the traffic sent to plane service integrator PSI to pass first through the VPN(Virtual Private Network)-Gateway VPN-Gw, then through the home agent HA. In this way the VPN-Gateway VPN-Gw can encrypt the traffic, that later is redirected to the mobile node MN by the home agent HA. In order to have this configuration, a Screened Subnet configuration for the firewall is selected for the fixed part of the network. Using this approach, the VPN-Gateway VPN-GW can be placed on the Bastion Host and the home agent HA in the Demilitarized-Zone network DMZ. By setting appropriate routing rules in the screening routers, packets should be forced to follow the route shown in Fig.10. Fig.10 shows two system operations, specifically in (a) operation with packet originated in the mobile node MN, and in (b) operation with packet directed to the mobile node MN.

Once the new connections are secured, the old ones can then be released and the handover procedure is completed.

Under the aforementioned EU Framework V IST project "WirelessCabin", a number of technical issues have been addressed. One of which is the inter-satellite system handover.

The "WirelessCabin" architecture follows that as shown in Fig.1. The handover strategy adopted in WirelessCabin also follows that described in previous sections. As a result, the mapping of the functional entities defined for handover onto the network architecture of the "WirelessCabin" network architecture is the same as shown in Fig.4. From that figure, it can be seen that the functional entities are mapped onto the Service Integration, Transport and the Service Provider Domain. This works well for "WirelessCabin" as it can ensure that no additional modifications are imposed on other parts of the network architecture that are not under the control of the "WirelessCabin" system.

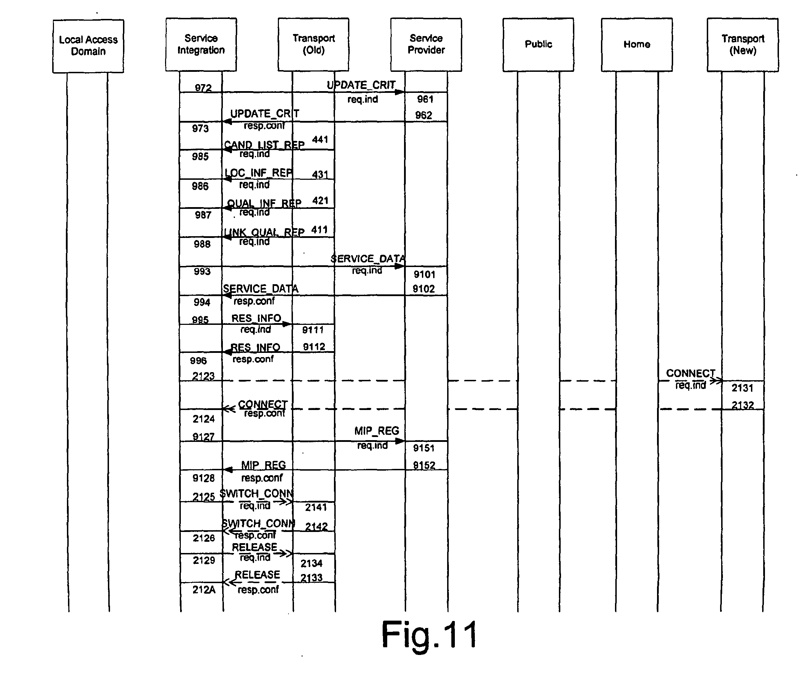

Fig.11 shows the information flows between the network domains. Messages that traverse the transport domain are carried using IP packets The signalling flow demonstrated in Fig.11 is a result of intra- and inter-domain signalling procedures among different functional entities defined for handover. This in turn depends on how the functional entities are mapped onto the network architecture. Thus, the mapping or the distribution of functional entities plays an important role in the design of the final signalling protocol.

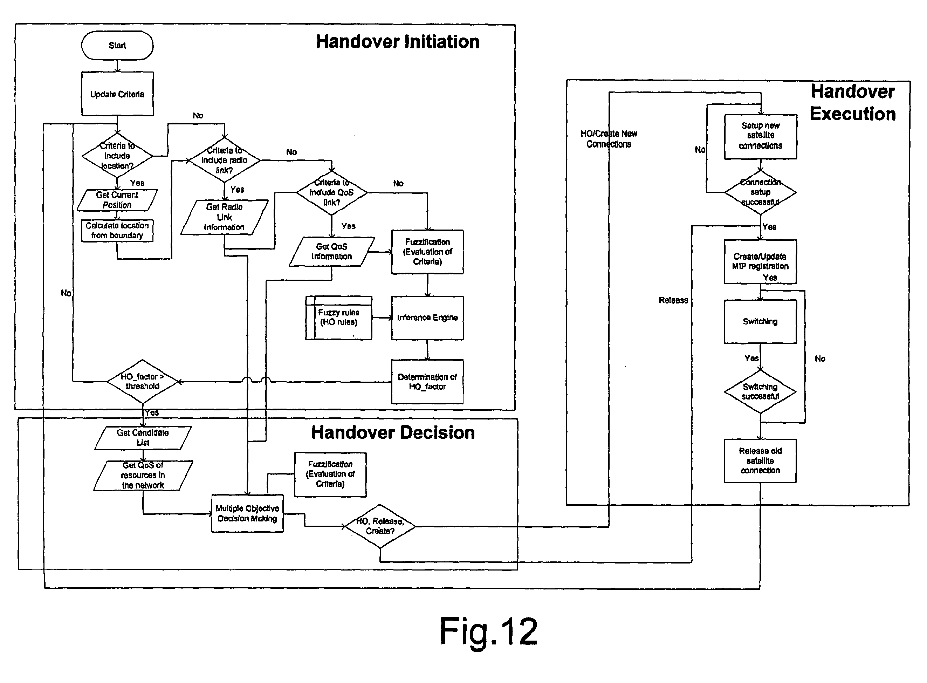

Fig.12 outlines the handover operation procedure. This procedure is obtained when the signalling procedure defined in Fig.11 is combined together with the handover algorithm shown in Fig.7.

### List of references

- BC: Bearer Control
- BT: Bluetooth
- CMC: Combining and Multicasting Function
- ESI: Earth Service Integrator
- ESP: IPsec encapsulated
- GPS: Global Positioning System
- HA: Home Agent
- HC: Handover Criteria
- HCA: Handover Criteria Adjustment
- HD: Handover Decision
- HI: Handover Initiation
- HND: Home Network Domain
- HO: Handover
- HOC: Handover Control
- HO-client: handover manager client
- HO-server: handover manager server
- HP: Handover Profile SI
- HPN: Handover Profile-ESI
- IP: Internet Protocol
- IPsec: Internet Protocol secure
- LAD: Local Access Domain
- LAF: Location Assessment Functions
- MCHO: Mobile Controlled Handover
- MEF: Measurement Functions
- MIP: Mobile IP
- MIPR: Mobile IP Registration
- MN: Mobile Node
- MoIP: Mobile IP
- QAF: Quality Assessment Functions
- QoS: Quality of Service
- PSI: Plane Service Integrator
- SBC: Switching and Bridging Control
- SHRN: Special Handover Request-Network
- SI: Service Integrator
- SID: Service Integration Domain
- SPD: Service Provider Domain
- TCC: Target Cells and Connections
- TCCN: Target Cells and Connection-Network
- TD: Transport Domain
- VPN: Virtual Private Network
- VPN-Gw: Virtual Private Network-Gateway
- WLAN: Wireless LAN

## Claims

1. Aeronautical communications system providing digital personal and multimedia information transmission between users of an aircraft wireless in-cabin network and terrestrial home networks via satellite connection by use of three segments, specifically a cabin segment, a transport segment, and a ground segment, each segment consisting of various network domains,
said cabin segment consisting of a local access domain (LAD) and a service integration domain (SID),
said transport segment consisting of one or more satellite systems constituting the transport domain (TD),
and said ground segment consisting of a service provider domain (SPD), a public network domain and a home network domain (HND),
said local access domain (LAD) comprising at least three radio access networks providing GSM/UTRAN (UMTS terrestrial radio access network) radio access, WLAN (Wireless LAN) access and Bluetooth (BT) radio access, said service integration domain (SID) hosting some core network functionalities of GSM/UMTS network and IP protocol functions for authentication, admission control and accounting, mobility support, Quality of Service (QoS) support and the interfaces towards the transport network, and said service integration domain (SID) further housing two enhanced routers, one directly connected to said local access domain (LAD) and another to the satellite terminal, these two routers being implemented with supporting protocol functions to perform various networking tasks, said router being connected to said local access domain (LAD) acting mainly as a multiplexer while the second one, hereafter called the intelligent router, being connected to a satellite terminal and hosting several intelligent functions for mobility and QoS support,
said transport domain (TD) providing connectivity between each wireless access network in said local access domain (LAD) and said service provider domain (SPD) via said service integration domain (SID) and consisting of one or several satellite and/or terrestrial systems, which include circuit-switched, packet-switched and broadcast systems, to provide circuit or packet-switched bearer services for the transport of service mix to a service provider on ground, handover between different satellite systems as well as combination of different systems being supported to increase coverage and capacity,
said service provider domain (SPD) comprising an enhanced router which interoperates with said intelligent router in said service integration domain (SID) in a client-server mode, being ensured that connection between said service integration domain (SID) and said service provider domain (SPD) is established and maintained, even when the signalling path is transferred to a different satellite system during handover,
said service provider domain (SPD) and said service integration domain (SID) comprising together a special managing system for handling handover management functions,
said handover management functions being performed by a pair of handover managers, specifically by a handover manager client (HO-client) located in said intelligent router of said service integration domain (SID) and by a handover manager server (HO-Server) located in the router of said service provider domain (SPD), both the handover manager client and the handover manager server interoperating with other network entities for handover, said handover manager client being able to communicate with more than one satellite system and to perform the handover between these systems, to enable inter-satellite systems handover by use of an intersatellite handover initiation and decision algorithm in said aeronautical network, wherein multiple constraints consideration for the handover initiation and decision algorithm is enabled by taking into account at least following parameters: satellite signal strength, quality of service, i.e. quality in the active link such as packet throughput, delay, etc, and relative location of the aeronautical network with respect to the satellite coverage, **characterised in that** fuzzy-logic heuristic rules and a neural network with approximate reasoning-based controllers for the intersatellite handover initiation and decision algorithm are used, **in that** said fuzzy logic is used to provide an inference engine under cognitive uncertainty to determine a handover factor and to provide learning, adaptation and fault-tolerance capabilities, **in that** a location predictor uses a connectionist learning approach known as reinforcement learning which is a computational approach to understand and automate goal-directed learning and decision-making, **in that** the location predictor uses the inputs of the system to predict the time and distance to the region where handover is required, **in that** the results of the location predictor are fed into said fuzzy logic inference engine which takes also into consideration several other input parameters from the system, and **in that** knowledge-based fuzzy rules are used to achieve an expert system in which multiple parameters can be analysed using heuristic rules, this algorithm producing the handover factor that can be used as a metric to determine whether handover is required.

2. Aeronautical communications system according to claim 1, **characterised in that** once handover is decided handover execution is made by joint utilisation of Mobile IP and IPsec standard protocols encapsulating the IPsec tunnel inside the Mobile tunnel with Encapsulating Security Payload ESP in a transport mode.

## Patentansprüche

1. Aeronautisches Kommunikationssystem, das eine Übertragung digitaler persönlicher und Multimedia-Informationen zwischen Nutzern eines drahtlosen flugzeugkabineninternen Netzes und terrestrischen Heimnetzen über eine Satellitenverbindung unter Verwendung dreier Segmente, nämlich einem Kabinensegment, einem Transportsegment und einem Bodensegment bereitstellt, wobei jedes Segment aus verschiedenen Netzbereichen besteht, wobei das Kabinensegment aus einem lokalen Zugangsbereich (LAD) und einem Dienstintegrationsbereich (SID) besteht,
wobei das Transportsegment aus einem oder mehreren, den Transportbereich (TD) bildenden Satellitensystemen besteht,
und wobei das Bodensegment aus einem Dienstanbieterbereich (SPD), einem öffentlichen Netzbereich und einem Heimnetzbereich (HND) besteht,
wobei der lokale Zugangsbereich (LAD) wenigstens drei Funkzugangsnetze umfasst, die einen GSM/UTRAN(terrestrisches UMTS-Funkzugangsnetz)-Funkzugang, WLAN(Wireless LAN)-Zugang und Bluetooth(BT)-Funkzugang bereitstellen,
wobei im Dienstintegrationsbereich (SID) einige Kernnetzfunktionalitäten von GSM/UMTS-Netz- und IP-Protokoll-Funktionen zur Berechtigungsüberprüfung, Zulassungskontrolle und Abrechnung, Mobilitätsunterstützung, Dienstgüte(QoS)-Unterstützung und die Schnittstellen zu den Transportnetzen hin untergebracht sind und der Dienstintegrationsbereich (SID) darüber hinaus zwei erweiterte Router beherbergt, von denen einer direkt mit dem lokalen Zugangsbereich (LAD) und der andere mit dem Satellitenterminal verbunden ist, wobei diese beiden Router mit unterstützenden Protokollfunktionen zur Durchführung verschiedener Netzaufgaben ausgeführt sind, wobei der mit dem lokalen Zugangsbereich (LAD) verbundene Router hauptsächlich als ein Multiplexer arbeitet, wogegen der zweite, nachfolgend als der intelligente Router bezeichnete Router mit einem Satellitenterminal verbunden ist und mehrere intelligente Funktionen zur Mobilitäts- und QoS-Unterstützung aufweist,
wobei der Transportbereich (TD) eine Anschlussmöglichkeit zwischen jedem drahtlosem Zugangsnetz im lokalen Zugangsbereich (LAD) und dem Dienstanbieterbereich (SPD) über den Dienstintegrationsbereich (SID) vorsieht und aus einem oder mehreren Satelliten- und/oder terrestrischen Systemen besteht, die schaltvermittelte, paketvermittelte und rundsendende Systeme einschließen, um schalt- oder paketvermittelte Übermittlungsdienste für den Transport eines Dienstemixes zu einem Dienstanbieter am Boden, Handover zwischen verschiedenen Satellitensystemen wie auch eine Kombination unterschiedlicher, zur Steigerung der Abdeckung und Kapazität unterstützter Systeme bereitzustellen,
wobei der Dienstanbieterbereich (SPD) einen erweiterten Router umfasst, der mit dem intelligenten Router im Dienstintegrationsbereich (SID) in einem Client-Server-Modus funktionell zusammenarbeitet, wobei sichergestellt wird, dass eine Verbindung zwischen dem Dienstintegrationsbereich (SID) und dem Dienstanbieterbereich (SPD) hergestellt und aufrechterhalten wird, sogar wenn der Signalisierungsweg auf ein unterschiedliches Satellitensystem während eines Handovers umgelegt wird,
wobei der Dienstanbieterbereich (SPD) und der Dienstintegrationsbereich (SID) zusammen ein besonderes Managing-System zum Handhaben von Handover-Management-Funktionen umfassen,
wobei die Handover-Management-Funktionen durch ein Paar Handover-Manager, spezifisch durch einen im intelligenten Router des Dienstintegrationsbereichs (SID) angeordneten Handover-Manager-Client (HO-client) und durch einen im Router des Dienstanbieterbereichs (SPD) angeordneten Handover-Manager-Server (HO-server), ausgeführt werden, wobei sowohl der Handover-Manager-Client als auch der Handover-Manager-Server mit anderen Netzentitäten für das Handover funktionell zusammenarbeiten, wobei der Handover-Manager-Client fähig ist, mit mehr als einem Satellitensystem zu kommunizieren und das Handover zwischen diesen Systemen auszuführen, um ein Intersatellitensysteme-Handover durch Verwendung eines Intersatelliten-Handover-Start- und -Entscheidungsalgorithmus im aeronautischen Netz zu ermöglichen, wobei eine Berücksichtigung mehrerer Nebenbedingungen für den Handover-Start- und -Entscheidungsalgorithmus durch Beachtung wenigstens folgender Parameter ermöglicht wird: Satellitensignalstärke, Dienstgüte, d.h. Güte in der aktiven Verbindung, wie z.B. Paketdurchsatz, Verzögerung usw., und relativer Ort des aeronautischen Netzes in Bezug auf die Satellitenabdeckung,
**dadurch gekennzeichnet, dass** heuristische Fuzzy-Logik-Regeln und ein neuronales Netz mit auf approximativem Schließen basierten Reglern für den Intersatelliten-Handover-Start- und -Entscheidungsalgorithmus verwendet werden, dass die Fuzzy-Logik zur Bereitstellung einer Inferenzmaschine unter kognitiver Ungewissheit benutzt wird, um einen Handover-Faktor zu bestimmen und Lern-, Anpassungs- und Fehlertoleranzfähigkeiten vorzusehen, dass ein Ortsvorhersager eine als Reinforcement-Learning bekannte Connectionist-Lernlösung verwendet, die eine Rechenlösung ist, um zielgerichtetes Lernen und Entscheidungsausführen zu verstehen und zu automatisieren, dass der Ortsvorhersager die Eingangssignale des Systems zum Vorhersagen der Zeit und des Abstandes zum Gebiet benutzt, in dem ein Handover erforderlich ist, dass die Ergebnisse des Ortsvorhersagers der Fuzzy-Logik-Inferenzmaschine zugeführt werden, die auch mehrere andere Eingangsparameter aus dem System berücksichtigt, und dass wissensbasierte Fuzzy-Regeln zum Erreichen eines Expertensystems verwendet werden, in dem mannigfaltige Parameter unter Verwendung heuristischer Regeln analysiert werden können, wobei dieser Algorithmus den Handover-Faktor erzeugt, der als ein Maßsystem zum Bestimmen, ob ein Handover erforderlich ist, benutzt werden kann.

2. Aeronautisches Kommunikationssystem nach Anspruch 1, **dadurch gekennzeichnet, dass** sobald auf Handover entschieden ist, eine Handover-Ausführung durch gemeinsame Benutzung von Mobile-IP- und IPSec-Standardprotokollen abgewickelt wird, wobei der IPSec-Tunnel innerhalb des Mobile-Tunnels mit Encapsulating Security Payload ESP in einem Transportmodus gekapselt wird.

## Revendications

1. Système de communications aéronautiques fournissant une transmission d'informations personnelles numériques et multimédia entre des utilisateurs d'un réseau en cabine sans fil d'aéronef et des réseaux domestiques terrestres via une connexion par satellite par l'utilisation de trois segments, spécifiquement un segment de cabine, un segment de transport, et un segment au sol, chaque segment se composant de divers domaines de réseau,
ledit segment de cabine se composant d'un domaine d'accès local (LAD) et d'un domaine d'intégration de service (SID),
ledit segment de transport se composant d'un ou de plusieurs systèmes par satellite constituant le domaine de transport (TD), et
ledit segment au sol se composant d'un domaine de fournisseur de service (SPD), d'un domaine de réseau public et d'un domaine de réseau domestique (HND),
ledit domaine d'accès local (LAD) comprenant au moins trois réseaux d'accès radio fournissant un accès radio GSM/UTRAN (réseau d'accès radio terrestre UMTS), un accès WLAN (LAN sans fil) et un accès radio Bluetooth (BT), ledit domaine d'intégration de service (SID) contenant certaines fonctionnalités de réseau de noyau du réseau GSM/UMTS et des fonctions de protocole IP pour l'authentification, la commande d'admission et la comptabilité, le support de mobilité, le support de qualité de service (QoS) et les interfaces vers le réseau de transport, et ledit domaine d'intégration de service (SID) contenant en outre deux routeurs améliorés, un directement relié audit domaine d'accès local (LAD) et un autre au terminal par satellite, ces deux routeurs étant implémentés avec des fonctions de support de protocole pour réaliser diverses tâches de mise en réseau, ledit routeur étant raccordé audit domaine d'accès local (LAD) agissant principalement comme un multiplexeur alors que le second, appelé ci-après le routeur intelligent, étant raccordé à un terminal satellite et contenant plusieurs fonctions intelligentes pour la mobilité et le support de QoS,
ledit domaine de transport (TD) fournissant une connectivité entre chaque réseau d'accès sans fil dans ledit domaine d'accès local (LAD) et ledit domaine de fournisseur de service (SPD) via ledit domaine d'intégration de service (SID) et se composant d'un ou de plusieurs systèmes par satellite et/ou terrestres, qui comprennent des systèmes à circuit commuté, commutés par paquet et de diffusion, pour fournir des services au transporteur de circuit ou commuté par paquet pour le transport de mélange de service à un fournisseur de service au sol, le transfert entre différents systèmes par satellite ainsi qu'une combinaison de différents systèmes étant supportés pour augmenter la couverture et la capacité,
ledit domaine de fournisseur de service (SPD) comprenant un routeur amélioré qui interopère avec ledit routeur intelligent dans ledit domaine d'intégration de service (SID) dans un mode de client-serveur, étant assuré que la connexion entre ledit domaine d'intégration de service (SID) et ledit domaine de fournisseur de service (SPD) est établie et maintenue, même lorsque le chemin de signalisation est transféré à un système par satellite différent pendant le transfert,
ledit domaine de fournisseur de service (SPD) et ledit domaine d'intégration de service (SID) comprenant à la fois un système de gestion spécial pour la gestion des fonctions de gestion de transfert, lesdites fonctions de gestion de transfert étant réalisées par une paire de gestionnaires de transfert, spécifiquement par un client gestionnaire de transfert (client HO) situé dans ledit routeur intelligent dudit domaine d'intégration de servie (SID) et par un serveur de gestionnaire de transfert (service HO) situé dans le routeur dudit domaine de fournisseur de service (SPD), à la fois le client gestionnaire de transfert et le serveur gestionnaire de transfert interagissant avec d'autres entités de réseau pour le transfert, ledit client de gestionnaire de transfert étant capable de communiquer avec plus qu'un système par satellite et pour réaliser le transfert entre ces systèmes, pour permettre le transfert de systèmes intersatellites par l'utilisation d'un algorithme d'initiation et de décision de transfert intersatellite dans ledit réseau aéronautique, dans lequel la considération de multiples contraintes pour l'algorithme d'initiation et de décision de transfert est permise en prenant en compte au moins les paramètres suivants : la puissance de signal de satellite, la qualité de service, c'est-à-dire la qualité dans la liaison active telle que le débit de paquet, le retard, etc. et l'emplacement relatif du réseau aéronautique par rapport à la couverture satellite, **caractérisée en ce que** des règles heuristiques de logique floue et un réseau neuronal avec des dispositifs de commande à base de résonance approchée pour l'algorithme d'initiation et de décision de transfert intersallite sont utilisées, **en ce que** ladite logique floue est utilisée pour fournir un moteur d'inférence sous une incertitude cognitive pour déterminer un facteur de transfert et pour fournir l'apprentissage, l'adaptation et les capacités de tolérance aux pannes, **en ce qu'**un prédicteur d'emplacement utilise une approche d'apprentissage de connexion connue comme un apprentissage de renforcement qui est une approche de calcul pour comprendre et automatiser l'apprentissage orienté vers un but et la prise de décision, **en ce que** le prédicteur d'emplacement utilise les entrées du système pour prédire le temps et la distance pour la région où le transfert est requis, et **en ce que** les résultats du prédicteur d'emplacement sont fournis dans le moteur d'inférence de logique floue qui prend en considération aussi plusieurs autres paramètres d'entrée du système, et **en ce que** les règles floues à base de connaissance sont utilisées pour obtenir un système expert dans lequel de multiples paramètres peuvent être analysés en utilisant des règles heuristiques, cet algorithme produisant le facteur de transfert qui peut être utilisé comme une mesure pour déterminer si un transfert est requis.

2. Système de communication aéronautique selon la revendication 1, **caractérisé en ce qu'**une fois qu'un transfert est décidé, l'exécution de transfert est faite par l'utilisation jointe de protocoles de norme IP mobile et IPsec encapsulant le tunnel IPsec à l'intérieur du tunnel mobile avec l'ESP de données utiles de sécurité d'encapsulation dans un mode de transport.
